# EUROPEAN PATENT SPECIFICATION

(11) **EP 4 425 029 B1**
(45) Date of publication and mention of the grant of the patent: **19.02.2025**
(21) Application number: 23159036.5
(22) Date of filing: 28.02.2023
(51) Int. Cl.: F16L 41/08

(54) **PORT ASSEMBLY GROUP FOR CLIMATE CONDITIONING SYSTEMS**
ANSCHLUSSBAUGRUPPE FÜR KLIMATISIERUNGSSYSTEME
GROUPE D'ASSEMBLAGE DE PORT POUR SYSTÈMES DE CLIMATISATION

(43) Date of publication of application: 04.09.2024
(73) Proprietor: Danfoss A/S, 6430 Nordborg (DK)
(72) Inventor: MELCHER, Domenic, 6400 Nordborg (DK); SCHERER, Eric, 6400 Nordborg (DK)
(74) Representative: Kuhnen & Wacker Patent- und Rechtsanwaltsbüro PartG mbB

(56) References cited:
- US-A- 5 213 378
- US-B2- 10 118 244

## Description

The present invention relates to ports for fluid lines of climate conditioning systems and refrigeration apparatuses, in particular to charge, discharge, maintenance, and/or measuring ports for climate conditioning tubes and refrigerant lines of such systems. Even though the invention is descripted mainly by the help of a climate conditioning system, the invention can also be applied to all liquid or gaseous fluid carrying lines, not only to lines pertaining to a heating or cooling system.

Fluid-carrying lines that convey or conduct liquid or gaseous fluid under negative, positive, or ambient pressure within a refrigerant circuit, e.g., from a reservoir to a heat exchanger or the like, usually need a port/opening at which the fluid circuit can be charged, refilled, drained, or at which operational parameters of the circuit and/or the fluid can be measured like pressure, temperature, or flow quantity or speed, etc. To such line ports adapters or holding devices, for example nipples, valves seats, gauge holders, etc., have to be attached to the line port for providing an interface for connecting another line, a valve, a gauge, etc., by means of which the fluid circuit can be charged, refilled, drained, or operational parameters can be measured in a fluid tight manner. These adapters or holding devices may be already mounted with or without the valve, gauge, etc. during manufacturing of the fluid line of climate conditioning systems or have to be installed at a later time when a need, for instance, for service or maintenance of the apparatus arises or when pre-installed ports/adapters are located in hard-to-reach areas, making it difficult to properly maintain and service the climate conditioning system.

The current port adapter assembly process contains a copper brazing operation. The connection between the line/tube and the adapter is realized by a pin design at the bottom of the adapter, which gets brazed into/around a bore of the line/tube surface. The contact area between the pin and the bore is limited by the magnitude of the hole in the line. Therefore, brazing is the preferred technology in the art for fixing the adapter to the port, as brazing is a well-known metal-joining process with which strong joints can be obtained.

Such brazed port adapters in air conditioning lines can sometimes cause problems because they are potential sources of refrigerant leaks. When these port adapters are not properly installed/brazed, they can become loose and cause refrigerant to escape, leading to reduced conditioning performance and occasionally to potential environmental harm. Additionally, leaks can lead to pressure drops and lack of proper maintenance, resulting in system inefficiencies and potential breakdowns. Furthermore, such ports, in particular when installed to negative pressure lines, can also be a point of contamination if they are not properly sealed, allowing dirt, moisture, or other contaminants to enter the fluid lines, potentially causing damage to the system.

As an alternative US 5,213,378 shows a fluid connector consisting of a longitudinally extending tubular member having a central passageway extending therethrough with the one end of such central passageway being threaded. An annular flange on the intermediate exterior portion divides the tubular member into an upper portion and a lower portion, which lower portion has a thin walled portion that extends from the flange to the one threaded end portion. The upper exterior portion of the tubular member is threaded to facilitate connection to a threaded conduit. The thin walled lower portion is subject to being upset rivet-like for cooperation with the flange to secure the tubular connector to a fluid line. Further the flange is subjected to a plastically deformation to complement the exterior contour of the conduit receiving such fluid connector.

Therefore, it is an objective of the present invention to provide an improved connection of a port adapter to a fluid line of climate conditioning systems. Thereby the connection according to the invention should be strong and reliable as well as easy to realize during manufacturing of the fluid line or at a later point of time, e.g., when a new port to a fluid line of a climate condition system becomes necessary. Furthermore, the connection system according to the invention should show a modular character and be applicable to a wide range of diameters of fluid lines and to a great variety of materials from which fluid lines can be made of. Moreover the connection system according to the invention should be cost efficient and robust, in particular with regard to external forces and temperature oscillations.

The objective of the invention is solved by a port assembly group according to claim 1. Preferred embodiments of the port assembly group according to the invention, of a fluid line with such a port assembly group, and a climate conditioning system with such a fluid line are specified in the subclaims directly or indirectly depending on claim 1.

The port assembly group according to to the invention can be attached to a fluid line of a climate conditioning system, e.g., an air conditioning system, and comprises a basically cup-shaped adapter part for receiving via the cup opening a nipple, a valve group, a measurement device, like a gauge, etc. The bottom portion of the adapter part has a central opening through which fluid can enter the cup portion of the adapter part. A spacer is arranged at the outer surface of the bottom portion of the adapter part, having a first bonding surface on a first side, which is formed complementary to the outer surface of the adapter part and facing to the outer surface of the bottom part. A first central tube section projects perpendicular from the first bonding surface for being received by the central opening in the bottom portion of the adapter part. A second bonding surface is formed as a concave partial cylindrical surface on a second side of the spacer and is complementary to the outer shell of the fluid line. From the partial cylindrical surface protrudes a second central tube section, which is aligned by a central tube axis with the first central tube section and projects into the volume spanned by the partial cylindrical surface. The second central tube section is provided for inserting into the port of the fluid line.

In an assembled/functional state of the port assembly group according to the invention the spacer is glued via the first bonding surface to the adapter part such that these two parts form a unit which can be glued to the fluid line via the second bonding surface which shows a partial negative form of the outer cylindrical surface of the fluid line. Thereby the second central tube section is inserted in the port in the fluid line and the first central tube section is inserted in the central opening of the adapter part. Thus, via the first and the second central tube sections a fluid connection between the fluid line via the fluid line port and the adapter part is provided. Now a charge line with a charge valve can be inserted into the (valve) adapter part such that a climate conditioning system can be charged, e.g.

As the first bonding surface of the spacer copies the outer surface of the bottom part of the adapter part and as the second bonding surface copies the outer form of the fluid line, large bonding surfaces are provided, leading to an improved and stronger connection of the port assembly group to the fluid line as well as between the adapter part and spacer. This is caused by the fact that the connection surfaces, here the bonding surfaces can be selected very much bigger than it is possible with the brazing technology used in the state of the art where a brazing ring is placed around the port rim and melted by heat to bond the fluid line to the port adapter. According to the invention the size of the two bonding surfaces can be selected by a person skilled in the relevant art in different ways and determined to be optimal with regard to magnitude, stability, spacial and economic reasons. E.g., the second bonding surface is freely extendable in fluid line longitudinal direction. Also, the diameter of the first bonding surface can be selected freely to an optimum size for achieving a strong and robust bonded joint within the limits of the available construction space.

A person skilled in the relevant art is aware of that the bonding strength depends on the magnitude of the surface and also on the materials used for the adapter part, and the spacer and the fluid line. E.g. when plastic tubes/lines are used in climate conditioning systems a person skilled in the relevant art will also chose a plastic material for the spacer and/or the adapter part as gluing of similar parts is less complicated than gluing of different materials. Nevertheless, the later is covered by the invention likewise. Accordingly, the adapter part as well as the spacer can be of any material, in particular of metal, plastic or reinforced plastic or elastic materials. Likewise the material of the fluid line/fluid tube can be any material known in the art, e.g. copper, brass, aluminium, plastic, reinforced plastic, or elastic material, like natural or synthetic rubber.

From the above it can be derived further that the adapter part and the spacer according to the invention must not be two separate parts, since also can be formed integrally as one single piece, e.g. by means of injection moulding. However, when realized as separate parts the adapter part can be formed individually for serving as adapter for tubes, valves, or measurement devices, wherein the spacer can be realized as a so-called same part which must only be adapted to the particular dimensions of the outer surface of the tube line onto which the spacer is glued according to the invention. Accordingly, the adapter part for example can be a kind of a nipple to which a tube or a line can be connected to, or a valve seat for accommodating a valve, e.g. a charge valve. The adapter part also can be part of a coupling, e.g. the female part of a pressure line coupling known in the art. The adapter part may comprise an internal thread into which a measurement device may be screwed in. Here a person skilled in the relevant art detects that all devices which can be fixed to ports of a fluid line by the state-of-the-art brazing technology can be realized by the port assembly group according to the invention also.

In a first preferred embodiment the first bonding surface can be a basically flat surface or conical surface, wherein spherical surfaces are imaginable as well. Thereby the central axis of the first central tube section and the second central tube section is basically perpendicular to the first bonding surface respectively coincide with the rotational symmetry axis of the first bonding surface. Further preferred the central axes of the two tube sections are aligned to each other and are perpendicular to the fluid line longitudinal axis, which means perpendicular to the rotational symmetry axis of the cylindrical form of the second bonding surface. However for special appliances an inclined central tube axis is realizable in case the port in the fluid line should have an inclined orientation due to construction space requirements, e.g. In this case also the cup shaped portion of the adapter part may have an inclined orientation aligned with central tube axis and the port axis.

A person skilled in the relevant art will understand that the inner and outer diameter of the first and second central tube section must not coincide and can be selected differently corresponding to requirements placed to the port assembly group, the adapter part, and/or the spacer. The spacer and the adapter part preferably are rotational symmetric parts; however their outer diameter can differ from each other such that the adapter part can be bigger in diameter than the spacer and vice versa. Thereby a person skilled in the relevant art will understand that the spacer can be basically in the shape of a cylinder, a cone, or a truncate cone, depending on the requirements to the magnitude of the first bonding surface and the second cylindrical bonding surface, i.e. depending on how much of the fluid line surface has to be covered by the cylindrical second bonding surface. Thereby the cross section of cylindrical second bonding surface may be bigger than a half circle such that the spacer can be snapped-on elastically over the fluid line to enhance mechanically the strength of the connection between the spacer and the fluid line.

When a port assembly group is mounted to a fluid line the second central tube section is received in a hole (port) of the fluid line and the second bonding surface is bonded to the outer surface of the fluid line, wherein in most of the cases the central tube section axis aligning the first central tube section with the second central tube section is oriented perpendicular to a longitudinal line direction. When the central tube section axis should be arranged inclined with respect to the refrigerant line axis, at least the design of the spacer has to be adapted such that the adapter part can rest bonded on the spacer in an inclined position, e.g. inclined in direction of the fluid line. In this case the port - the hole in the fluid line - preferably is aligned with the central tube section axis, i.e. is inclined to same angle to provide an easy mounting with a port diameter adapted to the tube section outer diameter. As mentioned before a fluid line according to the invention can be used in many kinds of climate conditioning systems in which a fluid has to be transported under negative, positive pressure or pressure-less from one place to another. Thereby via the port assembly group, i.e. the adapter part and the spacer bonded together, bonded to the fluid line fluid can be charged to or drained from the fluid circuit. Or the condition of the fluid can be monitored as to pressure, temperature, flow speed, viscosity, and any other parameter a person skilled in the relevant art is aware of. Finally, the invention provides for a port connection which can be used as commonly known in the art, however the joining strength of the port assembly group according to the invention to a fluid line is improved compared to the joining strength know from the brazing process used commonly in state of the art. This is achieved in particular by enlarging the contact surface with which the port assembly group is joint to the fluid line. Differing to the state of the art the joining area is a partial cylindrical surface arranged at the spacer and coaxial to the fluid line which is jointly bonded to the outer surface of the fluid line and not only a small ring area around the rim of the port which joins by means of brazing a state- of-the-art port assembly group to a fluid line. Hence, with bonding a partial cylindrical surface of the port assembly group to the fluid line provides a stronger joint between the port assembly group and the fluid line.

Furthermore, in one embodiment of the invention the spacer according to the invention is provided as a separate part and can fulfil its main objective to provide a stable base on a fluid line onto which a variety of different adapter parts can be bonded to. By separating these two parts the spacer can be designed as a same part for different adapter solutions and can also be bonded separately to the fluid line first. After that an adapter part can be fixed to the spacer preferably by bonding or any other connection method known in the art. In case the spacer is designed as a kind of standard-piece port base providing a releasable joint possibility to adapter parts, e.g. a thread/seal connection, only one port for a fluid line is sufficient to realize different maintenance actions to a fluid circuit, like charging or measuring the pressure in the fluid via the same port. For this it is imaginable to introduce a kind of check valve into the spacer, which check valve is closed when no adapter part is connected to the spacer.

In the embodiment descript above when the spacer is separated from the adapter part both parts can be of a simpler design with a higher degree of design freedom as the port assembly group known from the state of the art. In particular, the bonding or joining interface can be of standard means for joining the spacer with the adapter part. This can be achieved be simply providing a gluing surface or a thread for screwing the parts together, or by providing a snap-in or snap-on solution for connecting the adapter part to the spacer. Thereby it is indifferent if the spacer is fixed already to a fluid line or if the port assembly group as a whole is fixed to a part of a fluid line.

As the spacer can fulfil a standard piece function the spacer can be manufactured in mass production reducing associated part costs significantly. On the other side as the adapter part does not have to fulfil the function to be connectable to a port in a fluid line, the adapter part can also be of a simpler design and more specific to receive the device by means of which an interaction with the fluid transported by the fluid line can be realized. Hence a two part embodiment of the port assembly group according to the invention can be more cost economic than a one part solution in which the spacer forms an integral part of the port assembly group according to the invention.

With the help of the enclosed Figures preferred embodiments of a port assembly group unit according to the invention are explained in more detail in order to enhance the understanding of the basic idea of the invention. The present embodiments do not limit the scope of the idea of the invention, but only represent possible design alternatives, to which within the knowledge of a person with skills in the relevant art modifications can be made without leaving the scope of the invention. Therefore, all those modifications and changes are covered by the claimed invention. In the Figures it is shown in:
- Figure 1: schematically a design of a first embodiment of a port assembly group according to the invention;
- Figure 2: schematically an enlarged perspective view of a first side of the spacer according to the embodiment of Figure 1;
- Figure 3: schematically an enlarged perspective view of a second side of the spacer according to the embodiment of Figure 1;
- Figure 4: schematically the embodiment of Figure 1 in a joint state;
- Figure 5: schematically a second embodiment of the invention;
- Figure 6: schematically a third embodiment of the invention;
- Figure 7: schematically an embodiment according to the state of the art;

To improve readability same reference numerals are used for same components of different embodiments throughout the Figures and the description.

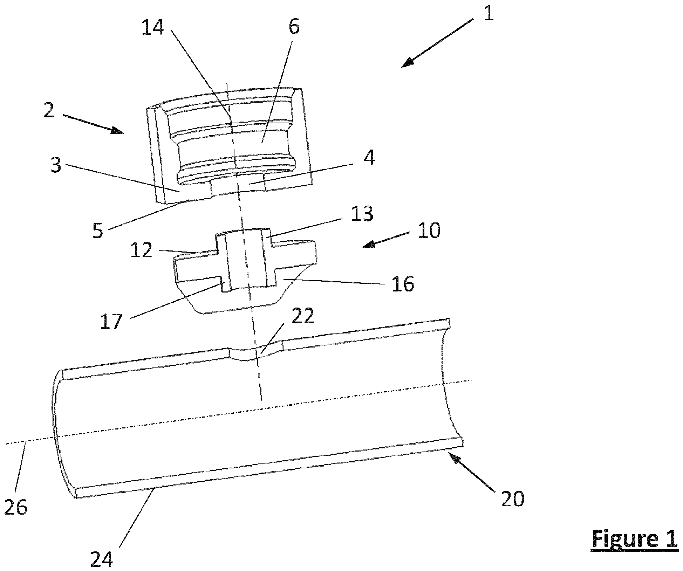

In Figure 1 a design of a first embodiment of a port assembly group 1 according to the invention is shown schematically. To a fluid line 20 a hole/port 22 is introduced in the outer wall for connecting the inner volume of the fluid line 20 with the exterior. To this port 22 a second central tube section 17 of a spacer 10 can be inserted such that a partial cylindrical surface 16 can rest on the outer surface 24 of the fluid line 20. According to the invention the partial cylindrical surface 16 of the spacer is designed to copy the cylindrical form 24 of the fluid line 20 in order that the spacer 10 can be bonded reliably to the fluid line 20 when the second central tube section 17 is inserted in the port 22. Opposite of the partial cylindrical surface 16 the spacer 10 shows a first bonding surface 12 which in the embodiment of Figure 1 is a flat surface, e.g. a ring-shaped plane, provided for being bonded to a counter surface at the outer side 5 of a bottom portion 3 of an adapter part 2. In the centre of the first bonding surface 12 a first central tube section 13 is arranged which fits with a central opening 4 in the bottom portion 3 of the adapter part 2. Accordingly, the outer surface 5 of the bottom part 3 is formed complementary to the first bonding surface 12 on the spacer 10 for providing a good bonding contact surface.

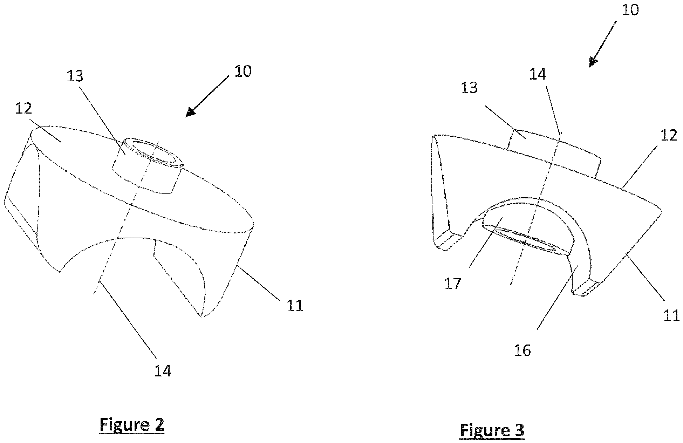

In Figures 2 and 3 the spacer 10 is shown in two perspective views from which it is detectable that the first bonding surface 12 is of a simpler design than the second bonding surface 16 which is a part of cylindrical shell surface. From both bonding surfaces 12 and 16 central tube sections 13 and 17 protrude for being inserted in the central opening 4 of the bottom portion 3 of the adapter part 2 - the first central tube section 13 - and in the port 22 of a fluid line 20 - the second central tube section 17. Both central tube sections 13 and 17 are preferably aligned by a central tube axis 14. When looking to Figure 1 it can be seen that the central tube axis 14 in this embodiment is perpendicular to the fluid line axis 26.

A person skilled in the relevant art will realize that the invention is not limited to this perpendicular embodiment shown in the Figures 1 to 6 accompanying the invention description as these Figures are used merely to explain the basic idea of the invention. In particular from Figure 1 it can be derived that an inclination towards the left or the right is easily possibly only by modifying the shape of the spacer in a correspondent way, i.e. designing the spacer asymmetric and inclined to one side. As the second central tube section 17 should fit into the port 22 it would be probably best to incline the port 22 as well in order to not increase the port dimensions more than necessary.

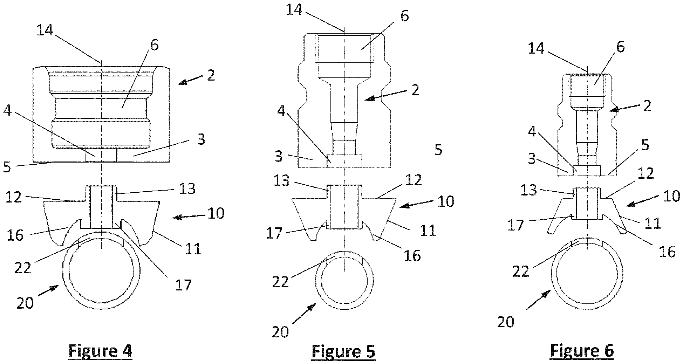

From Figure 4 it can be seen that the adapter part 2 of the port assembly group 1 according to the invention is basically of a cup-shaped design which - obviously to a person skilled in the relevant art - can be varied in its dimensions and proportions such that it can be more bowl-like in one embodiment (Figure 4) or more tube-like in another embodiment (Figure 6).

In the Figures 4 to 6 different proposal for design alternatives are depicted where it is shown that the second bonding surface 16 of the spacer 10 cannot be adapted only to the outer surface 24 (diameter) of the fluid line 20 since also in its angular extension encompassing the fluid line. By modifying the angle of the lateral surface 11 of the spacer 10 with respect to the central tube axis 14, the magnitude of the first bonding surface 12 perpendicular to the central tube axis 14 can be changed - c.f. spacers 10 of Figures 4 & 5 with regard to spacer of Figure 6. Further, the seconding bonding surface 16 of the spacer 10 can also be extended in fluid line 20 longitudinal direction in case a larger bonding surface is necessary or shortened if the available construction space requires a shortening of the first bonding surface 12. This may be compensated or accomplished by enlarging or reducing the angular extension of the spacer 10 around the encompassed fluid line 20, which can lead also to a snap-on embodiment in which the spacer 10 can be snapped-on the fluid line 20 (not shown).

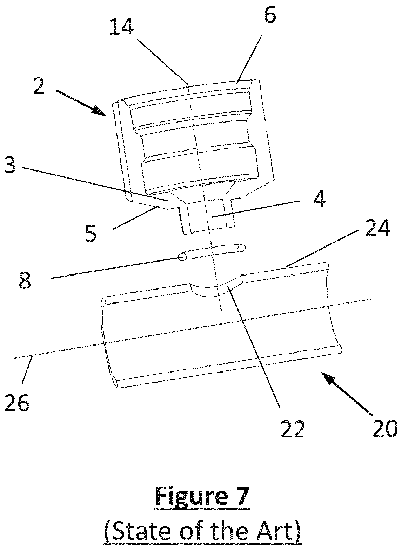

With Figure 7 an embodiment according to the state of the art is shown schematically. From this Figure 7 it can be seen clearly that a joint realized by means of a braze ring 8 covers only a very small surface around the rim of port 22. Hence the joint according to the state of the art cannot support high forces and less lateral forces and is therefore prone to fail with all the consequences descript above. This is due in particular as lever arms around the joint are larger as the joint extension. Further, the contact area is smaller, and even further brazing harms the material out of which the fluid line is made of. This leads to another advantage of the invention: It is more flexible in view of the selection of material combinations for the adapter part, the spacer and the use of materials for the fluid lines. Finally any combination of plastic or metal is possible and is only a question of an adequate selection of bonding material. So any kind of commonly used tubes are suitable to be used with the invention, as plastic tubes, brass tubes, aluminium tubes and copper tubes or the like. The same material variety and even a larger one is usable for the adapter part and the spacer according to the invention.

The prior art design of Figure 7 shows further that for each and every port assembly group a separate design is necessary due to the integral design of adapter part and spacer. This complicates the manufacturing of the port assembly group according to the state of the art, in particular as these parts has to be made of metal to withstand the temperatures arising during the brazing process. According to the invention the adapter part 2 and the spacer 10 can be manufactured of castable/mouldable materials on the one hand and can be designed as a two-part solution wherein the spacer can be of a more standard design and usable for many different adapter parts 2. So standard spacers for different fluid line diameter are possible.

From the above disclosure and accompanying Figures and claims, it will be appreciated that the port assembly group unit according to the invention offers many possibilities and advantages over the prior art. It should be further understood that the examples and embodiments described above are for illustrative purposes only and that various modifications, changes, or combinations of embodiments in the light thereof, which will be suggested to a person skilled in the relevant art, are included in the spirit and purview of this application.

### Reference List

- 1: Port assembly group
- 2: Adapter part
- 3: Bottom portion
- 4: Central opening
- 5: Outer surface / Outer side
- 6: Receiving means
- 8: Braze ring

- 10: Spacer
- 11: Lateral surface
- 12: First bonding surface
- 13: First central tube section
- 14: Central tube axis

- 16: Second bonding surface / Partial cylindrical surface
- 17: Second central tube section

- 20: Fluid line/Fluid tube
- 22: Hole / Port
- 24: Outer surface fluid line
- 26: Fluid line axis

## Claims

1. Port assembly group (1) for being attached to a fluid line (20) of a climate conditioning system, comprising:
- a basically cup-shaped adapter part (2) having a bottom portion (3) with a central opening (4) and an outer surface (5); and
- a spacer (10) having:
∘ a first bonding surface (12) on a first side (11) facing the outer surface (5) and formed complementary to the bottom portion (3) outer surface (5),
∘ a first central tube section (13) which protrudes perpendicular from the first bonding surface (11), and being configured for being received by the bottom portion (3) central opening (4);
∘ a second bonding surface (16) on a second side (15) opposite to the first side (11), which is formed as a concave partial cylindrical surface (16), and
∘ a second central tube section (17) aligned by a central tube section axis (14) with the first central tube section (13) and projecting from the partial cylindrical surface (16).

2. Port assembly group according to claim 1, wherein the central tube section axis (14) aligning the first and the second central tube section (13, 17) is perpendicular to the first bonding surface (12).

3. Port assembly group according to claim 2, wherein the central tube section axis (14) is perpendicular to a rotational axis of the second bonding surface (16).

4. Port assembly group according to any of the proceeding claims, wherein the first bonding surface (12) is a basically flat or conical formed surface.

5. Port assembly group according to any of the proceeding claims, wherein the spacer (10) is basically in the shape of a cylinder or a truncate cone oriented upright or upside-down.

6. Port assembly group according to any of the proceeding claims, wherein the adapter part (2) is made of metal, plastic, reinforced plastic, or of natural or synthetic elastic material and the spacer (10) is made of metal, plastic material, reinforced plastic, or of natural or synthetic elastic material.

7. Port assembly group according to any of the proceeding claims, wherein the adapter part (2) and the spacer (10) are formed as one-piece-design.

8. Port assembly group according to any of claims 1 to 6, wherein the adapter part (2) and the spacer (100) are bonded, screwed, or clipped together at the bottom portion (3) outer surface (5).

9. Port assembly group according to any of claims1 to 6 or 8, wherein the adapter part (2) is made from a different material than the spacer (10).

10. Port assembly group according to any of the proceeding claims, wherein the spacer (10) comprises a check valve for closing the first and/or the second central tube section (13, 17).

11. Port assembly group according to any of the proceeding claims, wherein inside the adapter part (2) receiving means (6) are provided for receiving a valve, a line adapter, a gauge, or a measuring device.

12. Refrigerant line (20) for a refrigeration apparatus, comprising at least one port assembly group (1) according to any of claims 1 to 12, wherein the second central tube section (17) is received in a port/hole (22) in the refrigerant line (20) and the second bonding surface (16) is bonded to the refrigerant line (20) outer surface (24).

13. Refrigerant (20) line according to claim 12, wherein the central tube section axis (14) aligning the first central tube section (13) with the second central tube section (17) is perpendicular to a refrigerant line axis (26).

14. Refrigerant (20) line according to claim 12, wherein the second bonding surface (16) is snapped-on the outer surface (24) of the refrigerant line (20).

15. Refrigerant (20) line according to any of claim 12 to 14, wherein the fluid line (20) is made of metal, e.g. brass, aluminium, copper, or of plastic material, reinforced plastic, or of natural or synthetic elastic material

16. Refrigeration apparatus or air conditioning apparatus, the apparatus comprising at least one refrigerant line (20) according to any of claims 12 to 15.

## Patentansprüche

1. Anschlussbaugruppe (1) zum Anbringen an einer Fluidleitung (20) eines Klimaanlagensystems, aufweisend:
- ein im Wesentlichen becherförmiges Adapterteil (2) mit einem Bodenbereich (3) mit einer zentralen Öffnung (4) und einer Außenfläche (5); und
- einen Abstandshalter (10) mit:
• einer ersten Verbindungsfläche (12) auf einer ersten Seite (11), die der Außenfläche (5) zugewandt ist und komplementär zum Bodenbereich (3) der Außenfläche (5) ausgebildet ist,
• einem ersten zentralen Rohrabschnitt (13), der senkrecht von der ersten Verbindungsfläche (11) vorsteht und so ausgestaltet ist, dass er von der zentralen Öffnung (4) des Bodenbereichs (3) aufgenommen werden kann;
• einer zweiten Verbindungsfläche (16) auf einer zweiten Seite (15) gegenüber der ersten Seite (11), die als konkave teilzylindrische Fläche (16) ausgebildet ist, und
• einem zweiten zentralen Rohrabschnitt (17), der durch eine zentrale Rohrabschnittsachse (14) mit dem ersten zentralen Rohrabschnitt (13) ausgerichtet ist und von der teilzylindrischen Fläche (16) vorsteht.

2. Anschlussbaugruppe gemäß Anspruch 1, wobei die Achse des zentralen Rohrabschnitts (14), die den ersten und den zweiten zentralen Rohrabschnitt (13, 17) ausrichtet, senkrecht zur ersten Verbindungsfläche (12) ist.

3. Anschlussbaugruppe gemäß Anspruch 2, wobei die Achse des zentralen Rohrabschnitts (14) senkrecht zu einer Drehachse der zweiten Verbindungsfläche (16) ist.

4. Anschlussbaugruppe gemäß einem der vorangehenden Ansprüche, wobei die erste Verbindungsfläche (12) eine im Wesentlichen flache oder konisch geformte Fläche ist.

5. Anschlussbaugruppe gemäß einem der vorangehenden Ansprüche, wobei der Abstandshalter (10) im Wesentlichen die Form eines Zylinders oder eines Kegelstumpfes hat, der aufrecht oder auf dem Kopf stehend ausgerichtet ist.

6. Anschlussbaugruppe gemäß einem der vorangehenden Ansprüche, wobei das Adapterteil (2) aus Metall, Kunststoff, verstärktem Kunststoff oder aus natürlichem oder synthetischem elastischen Material besteht und der Abstandshalter (10) aus Metall, Kunststoff, verstärktem Kunststoff oder aus natürlichem oder synthetischem elastischen Material besteht.

7. Anschlussbaugruppe gemäß einem der vorangehenden Ansprüche, wobei das Adapterteil (2) und der Abstandshalter (10) als einteilige Konstruktion ausgebildet sind.

8. Anschlussbaugruppe gemäß einem der Ansprüche 1 bis 6, wobei das Adapterteil (2) und der Abstandshalter (100) an der Außenfläche (5) des Bodenbereichs (3) miteinander verklebt, verschraubt oder verrastet sind.

9. Anschlussbaugruppe gemäß einem der Ansprüche 1 bis 6 oder 8, wobei das Adapterteil (2) aus einem anderen Material hergestellt ist als der Abstandshalter (10).

10. Anschlussbaugruppe gemäß einem der vorangehenden Ansprüche, wobei der Abstandshalter (10) ein Rückschlagventil zum Schließen des ersten und/oder des zweiten zentralen Rohrabschnitts (13, 17) aufweist.

11. Anschlussbaugruppe gemäß einem der vorangehenden Ansprüche, wobei innerhalb des Adapterteils (2) Aufnahmemittel (6) zur Aufnahme eines Ventils, eines Leitungsadapters, eines Messgeräts oder einer Messvorrichtung vorgesehen sind.

12. Kältemittelleitung (20) für eine Kühlvorrichtung, die zumindest eine Anschlussbaugruppe (1) gemäß einem der Ansprüche 1 bis 12 aufweist, wobei der zweite zentrale Rohrabschnitt (17) in einem Anschluss/einer Bohrung (22) in der Kältemittelleitung (20) aufgenommen ist und die zweite Verbindungsfläche (16) mit der Außenfläche (24) der Kältemittelleitung (20) verbunden ist.

13. Kältemittelleitung (20) gemäß Anspruch 12, wobei die Achse (14) des zentralen Rohrabschnitts, die den ersten zentralen Rohrabschnitt (13) mit dem zweiten zentralen Rohrabschnitt (17) ausrichtet, senkrecht zu einer Kältemittelleitungsachse (26) ist.

14. Kältemittelleitung (20) gemäß Anspruch 12, wobei die zweite Verbindungsfläche (16) mit der Außenfläche (24) der Kältemittelleitung (20) verrastet ist.

15. Kältemittelleitung (20) gemäß einem der Ansprüche 12 bis 14, wobei die Fluidleitung (20) aus Metall, z. B. Messing, Aluminium, Kupfer, oder aus Kunststoff, versteiftem Kunststoff oder aus natürlichem oder synthetischem elastischen Material besteht.

16. Kühl- oder Klimagerät, das zumindest eine Kühlmittelleitung (20) gemäß einem der Ansprüche 12 bis 15 aufweist.

## Revendications

1. Groupe d'assemblage d'orifice (1) destiné à être fixé à une conduite de fluide (20) d'un système de climatisation, comprenant :
- une pièce d'adaptation (2) fondamentalement en forme de coupe ayant une partie inférieure (3) pourvue d'une ouverture centrale (4) et une surface extérieure (5) ; et
- une entretoise (10) ayant :
∘ une première surface de liaison (12) sur un premier côté (11) faisant face à la surface extérieure (5) et de forme complémentaire à la surface extérieure (5) de la partie inférieure (3),
∘ une première section de tube central (13) qui fait saillie perpendiculairement à la première surface de liaison (11), et qui est conçue pour être reçue par l'ouverture centrale (4) de la partie inférieure (3) ;
∘ une deuxième surface de liaison (16) sur un deuxième côté (15) opposé au premier côté (11), qui est formée comme une surface cylindrique partielle concave (16), et
∘ une deuxième section de tube central (17) alignée par un axe de section de tube central (14) avec la première section de tube central (13) et faisant saillie depuis la surface cylindrique partielle (16).

2. Groupe d'assemblage d'orifice selon la revendication 1, dans lequel l'axe de la section de tube central (14) alignant la première et la deuxième section de tube central (13, 17) est perpendiculaire à la première surface de liaison (12).

3. Groupe d'assemblage d'orifice selon la revendication 2, dans lequel l'axe de la section de tube central (14) est perpendiculaire à un axe de rotation de la seconde surface de liaison (16).

4. Groupe d'assemblage d'orifice selon l'une quelconque des revendications précédentes, dans lequel la première surface de liaison (12) est une surface fondamentalement de forme plate ou conique.

5. Groupe d'assemblage d'orifice selon l'une quelconque des revendications précédentes, dans lequel l'entretoise (10) est fondamentalement de forme cylindrique ou en cône tronqué orientée à l'endroit ou à l'envers.

6. Groupe d'assemblage d'orifice selon l'une quelconque des revendications précédentes, dans lequel la pièce d'adaptation (2) est en métal, en plastique, en plastique renforcé ou en matériau élastique naturel ou synthétique et l'entretoise (10) est en métal, en matériau plastique, en plastique renforcé ou en matériau élastique naturel ou synthétique.

7. Groupe d'assemblage d'orifice selon l'une quelconque des revendications précédentes, dans lequel la pièce d'adaptation (2) et l'entretoise (10) sont formées d'une seule pièce.

8. Groupe d'assemblage d'orifice selon l'une quelconque des revendications 1 à 6, dans lequel la pièce d'adaptation (2) et l'entretoise (100) sont liées, vissées ou clipsées ensemble au niveau de la surface extérieure (5) de la partie inférieure (3).

9. Groupe d'assemblage d'orifice selon l'une quelconque des revendications 1 à 6 ou 8, dans lequel la pièce d'adaptation (2) est fabriquée dans un matériau différent de celui de l'entretoise (10).

10. Groupe d'assemblage d'orifice selon l'une quelconque des revendications précédentes, dans lequel l'entretoise (10) comprend un clapet anti-retour destiné à fermer la première et/ou la deuxième section de tube central (13, 17).

11. Groupe d'assemblage d'orifice selon l'une quelconque des revendications précédentes, dans lequel un moyen de réception (6) est fourni à l'intérieur de la pièce d'adaptation (2) pour recevoir une vanne, un adaptateur de conduite, une jauge ou un dispositif de mesure.

12. Conduite de réfrigérant (20) destinée à un appareil de réfrigération, comprenant au moins un groupe d'assemblage d'orifice (1) selon l'une quelconque des revendications 1 à 12, dans laquelle la deuxième section de tube central (17) est reçue dans un orifice/trou (22) de la conduite de réfrigérant (20) et la deuxième surface de liaison (16) est liée à la surface extérieure (24) de la conduite de réfrigérant (20).

13. Conduite de réfrigérant (20) selon la revendication 12, dans laquelle l'axe de section de tube central (14) alignant la première section de tube central (13) avec la deuxième section de tube central (17) est perpendiculaire à un axe (26) de la conduite de réfrigérant.

14. Conduite de réfrigérant (20) selon la revendication 12, dans laquelle la seconde surface de liaison (16) est encliquetée sur la surface extérieure (24) de la conduite de réfrigérant (20).

15. Conduite de réfrigérant (20) selon l'une quelconque des revendications 12 à 14, dans laquelle la conduite de fluide (20) est en métal, par exemple en laiton, en aluminium, en cuivre, ou en matière plastique, en plastique renforcé, ou en matière élastique naturelle ou synthétique.

16. Appareil de réfrigération ou de conditionnement d'air, l'appareil comprenant au moins une conduite de réfrigérant (20) selon l'une quelconque des revendications 12 à 15.
